# EUROPEAN PATENT APPLICATION

(11) **EP 1 840 991 A1**
(43) Date of publication of application: **03.10.2007**
(21) Application number: 05811459.6
(22) Date of filing: 25.11.2005
(51) Int. Cl.: H01M 6/14, H01M 4/62

(54) **BATTERY WITH NONAQUEOUS ELECTROLYTE**

(30) Priority: 29.11.2004 JP 2004344003; 31.03.2005 JP 2005102389
(71) Applicant: TOSHIBA BATTERY CO., LTD., Tokyo 140-0004 (JP)
(72) Inventor: SUZUKI, Masami, Kawasaki-shi, Kanagawa;2120054 (JP); HANAFUSA, Souichi, 2060031 (JP)
(74) Representative: HOFFMANN EITLE
(86) International application number: PCT/JP2005/022123
(87) International publication number: WO 2006/057441

(57) **Abstract**

This invention provides a battery with a non-aqueous electrolyte that has excellent pulse discharge characteristics and has prolonged discharge duration days. In this battery with a non-aqueous electrolyte, lithium or a lithium alloy is used in a negative electrode (2), and an oxyhalide, which is liquid at room temperature, is used as a positive electrode acting substance. A bismuth compound or an indium compound is contained in the battery, whereby an excessive reaction between lithium and an oxyhalide is suppressed and consequently can reduce a voltage delay phenomenon at the time of start of discharge and can improve pulse discharge characteristics to prolong discharge duration days. The bismuth compound or indium compound is preferably incorporated in the battery by dissolving or dispersing the bismuth compound or indium compound in a positive electrode acting substance which serves also as an electrolyte.

## Description

### Field of the invention

The present invention relates to a non-aqueous electrolyte battery using a positive pole acting substance doubled as an electrolyte, and more particularly to a non-aqueous electrolyte battery which improves pulse discharge characteristics.

### Background of the invention

A non-aqueous electrolyte battery using metal lithium as a negative pole acting substance and using an oxyhalide such as thionyl chloride, sulfuril chloride and phosphoryl chloride as a positive pole acting substance, is widely used for example as a backup power source for a memory used in various industrial equipments, for its characteristics of large energy density, of excellent storage capacity and of availability over wide range of temperature.

In this type of battery, a lithium halide produced by the reaction with a positive pole acting substance, is accumulated on the surface of the metal lithium negative pole, and a protective coating is formed which prevents the metal lithium from over-reacting with the positive pole acting substance. Accordingly, self-discharging of the battery is inhibited so that the battery can keep its battery voltage high for a long term.

However, said protective coating formed on the surface of the negative pole happens to excessively grow up under certain usage conditions of battery, and it might result in an increase of the battery impedance. As a result, it has caused such a trouble that the battery voltage is decreased temporarily at the beginning of discharge and thereby the equipments using the battery happen to be miss-operated. Particularly, in recent years, as digital equipments are widely used, the batteries are used increasingly in such a manner that an electric current is flown intensively for extremely short-term, for instance when pulse discharging. Accordingly, the decrease of voltage at the beginning of discharge (when pulse discharging) has been requested to be reduced.

This phenomenon of said voltage decrease at the beginning of discharge is called a voltage delay phenomenon in general, because the voltage is recovered again by the destruction of the protective coating as discharge is progressing. The battery using said liquid acting substance as a positive pole has inherently said phenomenon. Particularly, in case that the battery is used under high temperature, the voltage decrease at discharging appears remarkably, because the reactivity of a negative pole with a positive pole acting substance doubled as an electrolyte becomes higher.

Many improvements have been examined to deal with the problem mentioned above. For example, it was proposed to add polyvinyl chloride, alkyl-2-cyanoacrylate, Li₂O, L₁₂B₁₀Cl₁₀ or SeO₂ in the positive pole acting substance doubled as an electrolyte (refer to patent documents 1·3).

Also it has been examined to make various surface treatments on the metal lithium used as a negative pole. For example, it was proposed to use Li coated by aromatic compound, polyether film, polyether sulphone resign or polysulfone resign (refer to patent documents 4,5).

Although many such improvements as mentioned above had been examined, those are still insufficient, especially in case of pulse discharging wherein the current is intensively flown at the beginning of discharge. Accordingly it is strongly requested to improve the battery so as to keep enough operating voltage even under such severe conditions as continuous use of the battery under high temperature particularly.
Patent document 1; JP 51-119936 A
Patent document 2; JP 60-14765 A
Patent document 3; JP 62-43069 A
Patent document 4; JP 6-73301 B
Patent document 5; JP 3-17184 B

### Summary of the invention

The purpose of the present invention being invented in view of aforementioned circumstances is to provide a battery with an excellent pulse discharge characteristics.

To accomplish said purpose, the particular feature of the present invention is that a bismuth compound or an indium compound is contained in a non-aqueous electrolyte battery using metal lithium or lithium alloy as a negative pole and using an oxyhalide which is liquid state at room temperature as a positive pole acting substance.

By containing a bismuth compound or an indium compound in the battery, excessive reaction between lithium and oxyhalide used as a positive pole acting substance is inhibited, and thereby it can suppress the increase of the impedance of the battery which appears while keeping or using the battery at high temperature. At a result, the voltage delay phenomenon which appears at the beginning of discharge can be reduced, and a battery having an excellent pulse discharge characteristics can be obtained.

As a bismuth compound, bismuth chloride, bismuth oxychloride, bismuth oxide, bismuth iodide, basic bismuth acetate, basic bismuth carbonate, bismuth nitrate, bismuth sulfate, bismuth benzoate, bismuth citrate, bismuth tartrate, bismuth hydroxide or etc. can be used. However, the bismuth compound used in this invention is not limited to the compound listed above. In short, any compound which contains at least bismuth element can be used. In addition, any mixture which consists of several bismuth compounds can be used.

As an indium compound, indium acetate, indium oxide, indium monochloride, indium dichloride, indium trichloride, indium iodide, indium bromide, indium nitrate, indium sulfide, indium cyanide, indium antimonide, indium telluride, indium hydroxide or etc. can be used. However, the indium compound used in this invention is not limited to the compound listed above. In short, any compound which contains at least indium element can be used. In addition, any mixture which consists of several indium compounds can be used.

There are several methods for containing bismuth compound or indium compound in the battery. Any method can be adopted. However, in view of uniformity of bismuth compound dispersed in the battery and easiness for containing them in the battery, it is preferable to dissolve or disperse the bismuth compound or the indium compound beforehand in the positive pole acting substance doubled as an electrolyte. In a different way, the bismuth compound or the indium compound can be contained in the positive pole material, or can be painted and dried on the separator.

In case that battery is constructed by adding the bismuth compound or the indium compound in the positive pole acting substance doubled as an electrolyte beforehand, a substitution reaction between bismuth or indium dissolved or dispersed in electrolyte and lithium used as a negative pole, takes place on the surface of negative pole, and a protective coating which contains bismuth or indium is supposedly formed on the surface of negative pole. Accordingly, excessive reaction between electrolyte and lithium is inhibited as mentioned above, and thereby the pulse discharge characteristics of the battery are supposedly improved.

In case that thionyl chloride is used as positive pole acting substance, the total amount of bismuth element to be added is preferably 0.04mmol~ 10mmol to the 1 kg of thionyl chloride, and is more preferably 0.07mmol~ 4mmol. In case of indium compound, the total amount of indium element to be added is preferably 0.04mmol~ 40mmol to the 1 kg of thionyl chloride, and is more preferably 0.2mmol~15m mol.

Considering the additive effect of bismuth compound, even extremely small amount of bismuth element such as 0.04mmol/kg can take effect, and more additive of bismuth element, more effectiveness. However, if the additive of bismuth element exceeds a certain amount, the effect of improvement tends to be inhibited on the contrary. It means that much more amount of additive of bismuth compound, the coating wherein bismuth is contained, becomes too thick or too dense; accordingly the diffusion of lithium ion on the surface of negative pole is supposedly inhibited. Therefore, the amount of bismuth element is preferably 0.04mmol~10mmol, and is more preferably 0.07mmol~4mmol/kg, thereby a battery having more excellent pulse characteristics can be obtained.

As well, considering the additive effect of indium compound, even extremely small amount of indium element such as 0.04mmol/kg can take effect, and more additive of indium element, more effectiveness. However, if the additive of indium element exceeds a certain amount, the effect of improvement tends to be inhibited on the contrary, since the viscosity of the positive pole acting substance doubled as an electrolyte becomes higher. Therefore, the amount of indium element is preferably 0.04mmol~40mmol, and is more preferably 0.2mmol~15mmol/kg, thereby a battery having more excellent pulse characteristics can be obtained.

A bismuth compound or an indium compound can be independently used as an additive, however they can be used together with an additive such as polyvinyl chloride, etc. which is conventionally used as an additive of electrolyte. Moreover, a bismuth compound or an indium compound can be used to the battery of which negative pole is made surface treatment such as coating by vinyl polymer, of course.

### Brief description of the drawings

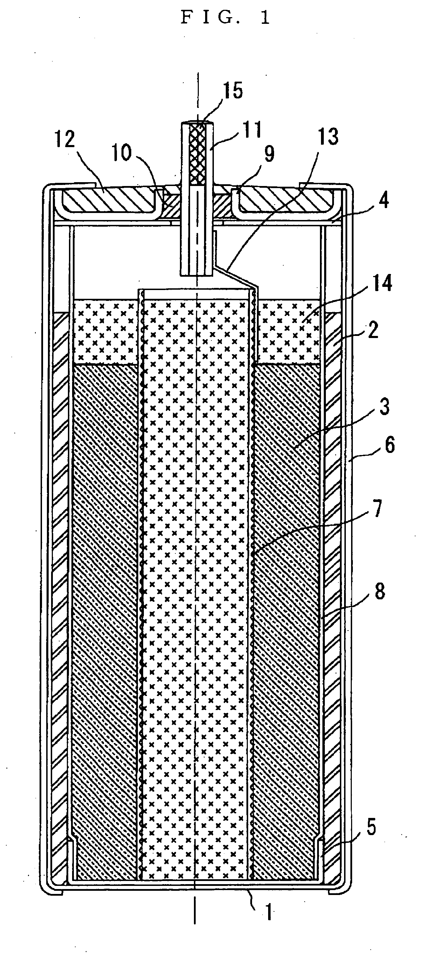

Fig.1 is a cross-section of the battery of examples and comparative examples according to the present invention.

### Description of the reference numeral

1---battery can, 2----negative pole, 3---porous carbon positive pole, 4---brim paper (glass separator), 5---bottom paper (glass separator), 6---wrapping tube, 7---positive pole current collector, 8---separator, 9---battery cap, 10---glass seal, 11---positive pole terminal, 12--- resin seal, 13---lead foil, 14---positive pole acting substance doubling as electrolyte, 15---seal,

### Description of the preferred embodiment

Hereinafter, a non-aqueous electrolyte battery according to the present invention is described in more detail by reference to the drawing.

### (Example 1)

Fig. 1 shows a cross section of the battery of examples and comparative examples according to the present invention. Also Fig.1 shows a cross section of A size of thionyl chloride•lithium battery using a lithium as a negative pole acting substance and thionyl chloride as a positive pole acting substance.

In the Fig.1, reference numeral 1 denotes a battery can made of 16mm diameter of stainless steel doubled as a negative pole terminal, and a tubular negative pole 2 is press-bonded to the inner surface of said battery can. Reference numeral 3 denotes a porous carbon positive pole, which is consisting of 45 wt% of acetylene black, 45 wt% of furnace black and 10 wt% of poly-tetra-fluoro-ethylene being kneaded with liquid mixture of water and ethanol, and being formed of 10mm diameter and 35mm height around the positive pole current collector 7, and being vacuum dried during 8 hours at 150 °C. The positive pole current collector 7 is made of an expanded metal of nickel by being formed cylindrically.

In the Fig.1, reference numeral 4, 5 and 8 denotes a separator made of glass fiber non-woven fabric, which separates the positive pole and the negative pole. A battery cap 9 is laser-welded to the upper opening of the battery can 1. At the center of the battery cap 9, a tubular positive pole terminal 11 is electrically insulated by a glass seal 10. The lower end of the positive pole terminal 11 is electrically connected to the positive pole current collector 7 via a lead foil 13.

A positive pole acting substance doubled as an electrolyte 14 which is poured through the tubular positive pole terminal 11, is stored in the can 1. The electrolyte is made by dissoluting both 1.2 mol/l of aluminum chloride and 1.2 mol /l of lithium chloride as an electrolyte, in addition by adding 0.1wt% of polyvinyl chloride, then by adding bismuth chloride(BiCl₃) which is dried at 120°C for 2 hours in the electrolyte just obtained as mentioned above so as to be 0.04 mmol/kg of molality to thionyl chloride, then by mixing by stirrer for 12 hours.

After pouring electrolyte, a seal 15 is inserted in the tubular positive pole terminal 11, and is laser-welded thereto. In the figure, reference numeral 12 denotes a resin seal made of epoxy resin, and 6 denotes a wrapping tube made of heat-shrinkable film.

### (Example 2)

The molality of added bismuth chloride is 0.07 mmol/kg. Except it, a battery was constructed in the same manner as the example 1.

### (Example 3)

The molality of added bismuth chloride is 0.4 mmol/kg. Except it, a battery was constructed in the same manner as the example 1.

### (Example 4)

The molality of added bismuth chloride is 2 mmol/kg. Except it, a battery was constructed in the same manner as the example 1.

### (Example 5)

The molality of added bismuth chloride is 4 mmol/kg. Except it, a battery was constructed in the same manner as the example 1.

### (Example 6)

The molality of added bismuth chloride is 10 mmol/kg. Except it, a battery was constructed in the same manner as the example 1.

### (Example 7~12)

Bismuth oxychloride (BiOCI) was added instead of bismuth chloride. Except it, batteries of examples 7~12 were constructed in the same manner as examples 1~6.

### (Example 13~18)

Instead of bismuth chloride, bismuth oxide (Bi₂O₃) was added so as to be a half of molality adopted in the examples 1~6. However, the concentration of added bismuth element is almost same as that of examples 1~6 and 7~12.

### (Comparative example 1)

A battery was constructed in the same manner as the example 1, except bismuth chloride was not added.

As to the batteries constructed according to the examples 1~18 and comparative example 1, pulse discharge experiments were made wherein 25µ A of base current was flown and wherein discharge by 50 mA at every 10 hours was kept for 0.5 second under the temperature of 60°C. The duration days taken until the minimum voltage of the battery became lesser than 3V, was shown in the table 1.

**Table 1**

| | Bismuth compound | Additive density mmol/kg | Duration days of pulse discharge (days) |
|---|---|---|---|
| Example 1 | BiCl₃ | 0 . 0 4 | 3 2 |
| Example 2 | BiCl₃ | 0 . 0 7 | 4 3 |
| Example 3 | BiCl₃ | 0 . 4 | 5 0 |
| Example 4 | BiCl₃ | 2 | 5 0 |
| Example 5 | BiCl₃ | 4 | 4 4 |
| Example 6 | BiCl₃ | 1 0 | 3 0 |
| Example 7 | BiOCl | 0 . 04 | 3 1 |
| Example 8 | BiOCl | 0 . 0 7 | 4 2 |
| Example 9 | BiOCl | 0.4 | 49 |
| Example 10 | BiOCl | 2 | 49 |
| Example 11 | BiOCl | 4 | 44 |
| Example 12 | BiOCl | 10 | 29 |
| Example 13 | Bi2O₃ | 0. 02 | 30 |
| Example 14 | Bi₂O₃ | O. 0 3 5 | 4 1 |
| Example 15 | Bi₂O₃ | 0.2 | 4 7 |
| Example 16 | Bi₂O₃ | 1 | 4 8 |
| Example 17 | Bi₂O₃ | 2 | 42 |
| Example 18 | Bi₂O₃ | 5 | 2 9 |
| Comparative example 1 | - | No additive | 1 2 |

Table 1 clearly shows that the duration days of the battery according to the comparative example 1 are 12 days for the minimum voltage being under 3V. On the contrary, the duration day of every battery according to examples 1~18 in which bismuth compound was contained, is longer such as 29~50 days.

Particularly, the battery according to examples 2~5, 8~11 and 14~17 show an excellent pulse characteristics since the duration days of those batteries are more than 40 days. As a result, the total amount of bismuth element in bismuth compound to be added is preferably 0.04 mmol~10mmol to 1 kg of solvent of thionyl chloride.

As explained above, in the battery using a liquid acting substance as positive pole, it is clear to obtain a battery with an excellent pulse electrical discharge characteristic by adding bismuth compound in the battery.

### (Example 19)

Instead of the electrolyte wherein bismuth chloride was added, an electrolyte wherein indium acetate was added was made in the manner as follows. The electrolyte was made by dissoluting both 1.2 mol /l of aluminum chloride and 1.2 mol /l of lithium chloride as an electrolyte, in addition by adding 0.1wt% of polyvinyl chloride, then by adding indium acetate (In(CH₃COO₃) which was dried at 120°C for 2 hours in the electrolyte just obtained as mentioned above so as to be 0.04 mmol/kg of molality to thionyl chloride, then by mixing by stirrer for 12 hours.

### (Example 20)

The molality of added indium acetate was 0.2 mmol/kg. Except it, a battery was constructed in the same manner as the example 19.

### (Example 21)

The molality of added indium acetate was 1 mmol/kg. Except it, a battery was constructed in the same manner as the example 19.

### (Example 22)

The molality of added indium acetate was 7 mmol/kg. Except it, a battery was constructed in the same manner as the example 19.

### (Example 23)

The molality of added indium acetate was 15 mmol/kg. Except it, a battery was constructed in the same manner as the example 19.

### (Example 24)

The molality of added indium acetate was 40 mmol/kg. Except it, a battery was constructed in the same manner as the example 19.

### (Example 25~30)

Indium oxide (In₂O₃) was added instead of indium acetate. Except it, batteries of examples 25~30 were constructed in the same manner as examples 19~24.

### (Example 31~36)

Indium trichloride (InCl₃) was added instead of indium acetate. Except it, batteries of examples 31~36 were constructed in the same manner as examples 19~24.

### (Comparative example 2)

A battery was constructed in the same manner as the example 19, except indium acetate was not added.

As to batteries constructed according to the examples 19~36 and comparative example 2, pulse discharge experiments were made wherein 25µ A of base current was flown and wherein discharge by 50 mA at every 10 hours was kept for 0.5 second under the temperature of 60°C. The duration days taken until the minimum voltage of the battery became lesser than 3V, was shown in the table 2.

**Table 2**

| | Indium compound | Additive density of In element mmol/kg | Duration days of pulse discharge (days) |
|---|---|---|---|
| Example 19 | In(CHsC00)s | 0.04 | 2 5 |
| Example 20 | In(CH₃COO)₃ | 0.2 | 3 6 |
| Example 21 | In(CH₃COO)₃ | 1 | 4 1 |
| Example 22 | ln(CH₃COO)₃ | 7 | 4 3 |
| Example 23 | In(CH₃COO)s | 1 5 | 3 7 |
| Example 24 | In(CH₃COO)₃ | 4 0 | 2 5 |
| Example 25 | In₂O₃ | 0.04 | 2 6 |
| Example 26 | In₂0₃ | 0.2 | 3 7 |
| Example 27 | In₂O₃ | 1 | 43 |
| Example 28 | In₂O₃ | 7 | 44 |
| Example 29 | In₂O₃ | 15 | 37 |
| Example 30 | In₂O₃ | 40 | 24 |
| Example 31 | InCl₃ | 0.04 | 22 |
| Example 32 | InCl₃ | 0.2 | 36 |
| Example 33 | InCl₃ | 1 | 39 |
| Example 34 | InCl₃ | 7 | 4 1 |
| Example 35 | InCl₃ | 15 | 36 |
| Example 36 | InCl₃ | 40 | 22 |
| Comparative example 2 | - | No additive | 1 2 |

Table 2 clearly shows that the duration days of the battery according to the comparative example 2 wherein indium compound was not contained, are 12 days for the minimum voltage being under 3V. On the contrary, the duration day of every battery according to examples 1~18 wherein bismuth compound was contained, were longer such as 22~44 days.

Particularly, the battery according to examples 20~23, 26~29 and 32~ 35 wherein the total amount of indium element in indium compound to be added was 0.2 mmol~ 15mmol to 1 kg of solvent of thionyl chloride, have an excellent pulse characteristics, since the duration days of those batteries were more than 35 days.

As explained above, in the battery using a liquid acting substance as positive pole, it is clear to obtain a battery with an excellent pulse electrical discharge characteristic by adding indium compound in the battery.

### Industrial applicability

As mentioned above, a non-aqueous electrolyte battery according to the present invention can inhibit the voltage decrease at the pulse discharging and thereby duration day of discharge becomes longer. Accordingly the battery is suitable for use wherein the intensive current flow for extremely short-term at the beginning of discharge is required, for instance.

## Claims

1. A non-aqueous electrolyte battery using a lithium or lithium alloy as a negative pole, and using an oxyhalide as a positive pole acting substance which is liquid state at room temperature, wherein bismuth compound or indium compound is contained in the battery.

2. A non-aqueous electrolyte battery according to claim 1, wherein bismuth compound or indium compound is contained in the battery by adding bismuth compound or indium compound in a positive pole acting substance doubled as an electrolyte.

3. A non-aqueous electrolyte battery according to claim 1, wherein bismuth compound is comprised of at least one kind of element selected from bismuth chloride, bismuth oxychloride and bismuth oxide.

4. A non-aqueous electrolyte battery according to claim 1, wherein indium compound is comprised of at least one kind of element selected from indium acetate, indium oxide and indium chloride.

5. A non-aqueous electrolyte battery according to claim 2, wherein a positive pole acting substance is comprised of thionyl chloride and wherein the total amount of bismuth element in bismuth compound to be added is 0.04 mmol~ 10mmol to 1 kg of thionyl chloride.

6. A non-aqueous electrolyte battery according to claim 2, wherein a positive pole acting substance is comprised of thionyl chloride and wherein the total amount of bismuth element in bismuth compound to be added is 0.07 mmol~4mmol to 1 kg of thionyl chloride.

7. A non-aqueous electrolyte battery according to claim 2, wherein a positive pole acting substance is comprised of thionyl chloride and wherein the total amount of indium element in indium compound to be added is 0.04 mmol~40mmol to 1 kg of thionyl chloride.

8. A non-aqueous electrolyte battery according to claim 2, wherein a positive pole acting substance is comprisd of thionyl chloride and wherein the total amount of indium element in indium compound to be added is 0.2 mmol~15mmol to 1 kg of thionyl chloride.
